(19) Europäisches Patentamt
European Patent Office
Office européen des brevets

(11) Veröffentlichungsnummer : **0 351 747 B1**

# (12) EUROPÄISCHE PATENTSCHRIFT

(45) Veröffentlichungstag der Patentschrift :
**01.07.92 Patentblatt 92/27**

(51) Int. Cl.$^5$ : **C04B 35/58,** D01F 9/10

(21) Anmeldenummer : **89113047.8**

(22) Anmeldetag : **15.07.89**

## (54) Verfahren zur Herstelllung von Siliziumnitrid enthaltendem keramischem Material aus polymeren Hydridochlorsilazanen.

(30) Priorität : **20.07.88 DE 3824614**

(43) Veröffentlichungstag der Anmeldung :
**24.01.90 Patentblatt 90/04**

(45) Bekanntmachung des Hinweises auf die Patenterteilung :
**01.07.92 Patentblatt 92/27**

(84) Benannte Vertragsstaaten :
**BE DE FR GB IT NL**

(56) Entgegenhaltungen :
**EP-A- 0 235 486**
**EP-A- 0 266 918**
**WORLD PATENT INDEX LATEST DATABASE, Woche 41, Zugangs Nr. 87-287383, 1987, Derwent Publications Ltd, Londen, GB; &JP-A-62 199 623 (TOSHIBA SILICONE K.K.) 03-09-1987**

(73) Patentinhaber : **HOECHST AKTIENGESELLSCHAFT**
**Postfach 80 03 20**
**W-6230 Frankfurt am Main 80 (DE)**

(72) Erfinder : **Gerdau, Thomas, Dr.**
**Königsteiner Strasse 17**
**W-6239 Eppstein/Taunus (DE)**
Erfinder : **Kleiner, Hans-Jerg, Dr.**
**Altköningstrasse 11a**
**W-6242 Kronberg/Taunus (DE)**
Erfinder : **Brück, Martin**
**Haneckstrasse 17**
**W-6238 Hofheim am Taunus (DE)**
Erfinder : **Peuckert, Marcellus, Dr.**
**Platanenweg 8**
**W-6238 Hofheim am Taunus (DE)**
Erfinder : **Aldinger, Fritz, Dr.**
**Barbarossastrasse 44**
**W-6458 Rodenbach (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die hervorragenden Eigenschaften von Siliziumnitrid $Si_3N_4$-mechanische Festigkeit, Härte, Korrosions-, Oxidations- und Thermoschockbeständigkeit - machen Siliziumnitrid enthaltendes keramisches Material zu einem interessanten Werkstoff von erheblicher kommerzieller Bedeutung.

Dieselben positiven Eigenschaften erschweren allerdings auch die Formgebung, so daß sich auf pulvertechnologischem Weg, d.h. unter Einsatz von $Si_3N_4$-Pulver, keramische Formteile, wie Schneidewerkzeuge nur unter großem Aufwand herstellen lassen. Spezielle Formen, wie dünne Schichten und keramische Fasern lassen sich mittels der Pulvertechnologie praktisch überhaupt nicht erzeugen. Es ist bekannt, daß die Pyrolyse von löslichen oder schmelzbaren Polysilizanen in einer inerten Atmosphäre ($N_2$ oder Argon) ein Siliziumnitrid enthaltendes keramisches Material liefert, so daß dieser Weg eine vielversprechende Alternative zur pulvertechnologischen Herstellung derartiger Werkstücke darstellt (R.R. Wills et al., Ceramic Bulletin, Vol. 62 (1983), 904 - 915).

Es wurde ebenfalls vorgeschlagen, die Pyrolyse von Polysilazanen in $NH_3$ durchzuführen, da in diesem Fall ein sehr reines, kohlenstofffreies $Si_3N_4$ gebildet wird (EP-A-250073).

Die Formgebung kann nun bereits auf der Stufe des Polysilazans, d.h. des "präkeramischen Polymers" erfolgen, indem dieses entweder in einem Lösungsmittel gelöst oder geschmolzen und dann in die gewünschte Form gebracht wird. Ein prinzipieller Nachteil der Verarbeitung aus der Schmelze ist jedoch, daß der hergestellte Formkörper zunächst durch Reaktion mit einem reaktiven Gas wie $HSiCl_3$ (US-A-4 535 007) oder mit Wasserdampf (US-A-3 853 567) unschmelzbar gemacht werden muß, um ein erneutes Schmelzen bei der folgenden Pyrolyse zu vermeiden. In DE-A-37 33 727 und DE-A-37 33 729 wird die Herstellung von polymeren Hydridochlorsilazanen beschrieben, die dann in einem organischen Lösungsmittel gelöst und mit flüssigem oder gasförmigem $NH_3$ zu Polyhydridosilazanen umgesetzt werden ("Ammonolyse"). Diese können durch Pyrolyse in $NH_3$-Atmosphäre zu einem praktisch C-freien, Siliziumnitrid enthaltenden keramischen Material umgewandelt werden. Es wurde nun überraschenderweise gefunden, daß auch die direkte Pyrolyse der genannten polymeren Hydridochlorsilazane (ohne vorherige Umwandlung in chlorfreie Polyhydridosilazane gemäß DE-A-37 33 729) in einer $NH_3$ enthaltenden Atmosphäre eine im wasentlichen aus Siliziumnitrid aufgebaute Keramik ergibt, die nicht nur praktisch kohlenstofffrei, sondern auch weitgehend chlorfrei ist. Die polymeren Hydridochlorsilazane werden durch diese Behandlung mit $NH_3$ unschmelzbar. Damit stellt die vorliegende Erfindung ein Verfahren dar, mit dem schmelzbare polymere Hydridochlorsilazane zu einem weitgehend chlor- und kohlenstofffreien, Siliziumnitrid enthaltenden keramischen Material pyrolysiert werden können, ohne daß die aus den polymeren Hydridochlorsilazanen geformten Körper, wie Fasern, Schichten oder monolithische Werkstücke bei der Pyrolyse schmelzen.

Gegenstand der vorliegenden Erfindung ist ein Verfahren zur Herstellung von Siliziumnitrid enthaltendem keramischem Material, dadurch gekennzeichnet, daß man polymere Hydridochlorsilazane der Formel

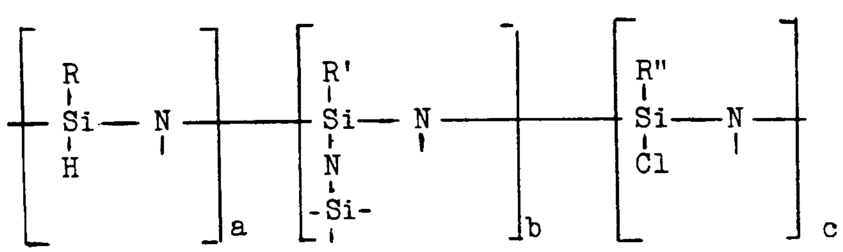

wobei die freien Valenzen der Stickstoffatome mit H-Atomen oder Silylresten R*SiXN< (X = H, Cl, N<) abgesättigt sind und wobei R, R′, R″, R* Alkylgruppen mit 1 bis 6 C-Atomen und a, b, c die Molfraktionen der jeweiligen Struktureinheiten bedeuten, bei einer Temperatur unterhalb des Erweichungspunktes der polymeren Hydridochlorsilazane durch Behandlung mit gasförmigem $NH_3$ unschmelzbar macht und sie dann in einer $NH_3$ enthaltenden Atmosphäre bei Temperaturen von 700 bis 1500°C pyrolysiert.

Vorzugsweise sind R, R′, R″, R* Alkylgruppen mit 1 bis 3 C-Atomen. Besonders bevorzugt ist R = R′ = R″ = R* = $CH_3$.

Eine mögliche Ausführungsform besteht darin, daß man das polymere Hydridochlorsilazan in einer $NH_3$ enthaltenden Atmosphäre von einer Temperatur unterhalb des Erweichungspunktes bis zur gewählten Pyrolysetemperatur aufheizt. Dabei wird das Polymere zu Beginn des Aufheizens unschmelzbar gemacht und direkt anschließend pyrolysiert.

Man kann aber auch das Polymere zunächst unschmelzbar machen und dann in einem späteren Schritt

pyrolysieren.

Bei Pyrolysetemperaturen unterhalb 1200°C entstehen amorphe Werkstoffe, während sich bei Pyrolysetemperaturen im Bereich von 1200 bis 1500°C mikrokristalline bis kristalline keramische Werkstoffe bilden, die als kristalline Phase $\alpha$-$Si_3N_4$ enthalten.

Die als Ausgangsprodukte eingesetzten polymeren Hydridochlorsilazane können dadurch erhalten werden, daß man Oligohydridoalkylsilazane der allgemeinen Formel $(R^1SiHNH)_n$ worin n etwa 3 bis 12 ist und $R^1$ eine Alkylgruppe mit 1 bis 6 C-Atomen bedeutet, mit einem Dichlorhydridoalkylsilan der allgemeinen Formel $R^2SiHCl_2$, worin $R^2$ eine Alkylgruppe mit 1 bis 6 C-Atomen bedeutet, bei 30 bis 300°C umsetzt. Es werden dabei leichtflüchtige Nebenprodukte gebildet. Diese werden während der Reaktion entfernt.

Die eben genannten Oligchydridoalkylsilazane $(R^1SiHNH)_n$ können wiederum dadurch erhalten werden, daß man ein Dichlorhydridoalkylsilan der Formel $R^1SiHCl_2$, wobei $R^1$ die obige Bedeutung hat, mit überschüssigem $NH_3$ in einem Lösungsmittel umsetzt, wie in US-A-4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Die Reste $R^1$ und $R^2$ in den Oligohydridoalkylsilazanen $(R^1SiHNH)_n$ (im folgenden auch kurz "Oligosilazane" genannt) bzw. im Dichlorhydridoalkylsilan $R^2SiHCl_2$ (im folgenden auch kurz "Dichloralkylsilan" genannt) können gleich oder verschieden sein, vorzugsweise haben sie 1 bis 4 C-Atome.

Besonders bevorzugt ist es, daß $R^1 = R^2 = CH_3$ ist. Vorzugsweise beträgt das molare Verhältnis der Reaktanten (bei der obigen Umsetzung zum polymeren Hydridochlorsilazan) Dichloralkylsilan:$R^1$SiHNH-Einheit des Oligosilazans etwa 0,2:1 bis 1,5:1, insbesondere 0,3:1 bis 1:1.

Zur Bildung der polymeren Hydridochlorsilazane werden vorzugsweise die Oligosilazane vorgelegt und das Dichloralkylsilan zugegeben. Da die Reaktion exotherm ist, wird beim Zusammengeben der Reaktanten vorzugsweise zunächst die Temperatur bei 30 bis 50°C gehalten. Anschließend erhitzt man auf Temperaturen von 100 bis 300°C, vorzugsweise auf 120 bis 250°C.

Die bei der Herstellung der polymeren Hydridochlorsilazane als Nebenprodukte gebildeten Leichtsieder, wie $RSiHCl_2$, $RSiClH_2$, $RSiCl_3$, HCl, $H_2$, $NH_3$ (wobei R = $R^1$ oder $R^2$ ist), entweichen während der Reaktion teilsweise. Nach beendeter Umsetzung werden die restlichen Leichtsieder im allgemeinen durch Anlegen von Vakuum aus dem Reaktionsgefäß entfernt.

Das bei dieser Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem polymeren Hydridochlorsilazan abgetrennt werden.

Die Reaktionsdauer richtet sich nach der Geschwindigkeit des Aufheizens und der Reaktionstemperatur. Im allgemeinen genügt eine Reaktionszeit von 5 bis 7 Stunden.

Es ist auch möglich, die polymeren Hydridochlorsilazane in einem organischen Lösungsmittel herzustellen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoff wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die polymeren Hydridochlorsilazane werden dann durch Abdestillation des Lösungsmittels unter reduziertem Druck erhalten.

Gegebenenfalls kann das Verfahren auch unter vermindertem Druck durchgeführt werden. Auch bei Drükken im Bereich von 1 bis 10 Atmosphären kann gearbeitet werden.

Die Herstellung der polymeren Hydridochlorsilazane kann auch kontinuierlich durchgeführt werden.

Die polymeren Hydridochlorsilazane, die als Ausgangsprodukte für das Siliziumnitrid enthaltende keramische Material eingesetzt werden, haben eine molekulare Struktur, die durch die Formel

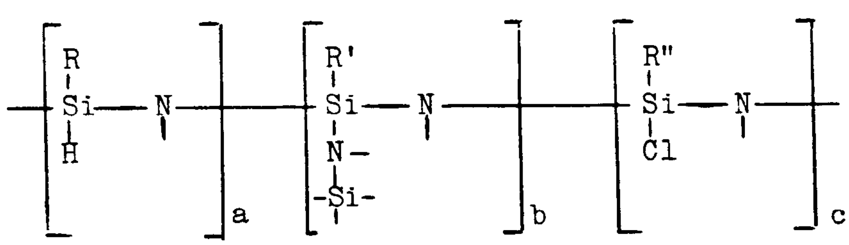

(I)

wiedergegeben werden kann, wobei die freien Valenzen an den Stickstoffatomen mit H-Atomen oder Silylresten R*SiXN< (X = H, Cl oder N<) abgesättigt sind. R, R′, R″, R* bedeuten dabei Alkylgruppen mit 1 bis 6, vorzugsweise 1 bis 3 C-Atomen, und a, b, c bedeuten die Molfraktionen der jeweiligen Struktureinheiten. Es ist a + b + c = 1. Besonders bevorzugt ist $R = R' = R'' = R^* = CH_3$. Die polymeren Hydridochlorsilazane haben eine netzartige Struktur.

Die Werte der Molfraktionen b und c sind umso höher (und entsprechend der Wert von a umso niedriger), je höher das Verhältnis Dichloralkylsilan:$R^1$SiHNH-Einheit des Oligosilazans ist. Die jeweils vorliegenden Werte von a, b, c können durch Integration der $^1$H-NMR-Spktren und durch die Elementaranalyse ermittelt werden. Im allgemeinen liegen die Werte a, b, c, bei 0,1 bis 0,8 wobei a + b + c = 1 ist. Bevorzugt sind solche polymeren Hydridochlorsilazane, bei denen die Werte für a und b bei 0,1 bis 0,5 liegen, insbesondere bei 0,2 bis 0,4. Die bevorzugten Werte für c liegen bei 0,1 bis 0,6, insbesondere bei 0,3 bis 0,6. Diese Werte lassen sich, wie gesagt, über den relativen Anteil des Dichloralkylsilans im Reaktionsgemisch einstellen und über die genannten Analysenmethoden kontrollieren. Die eben genannten bevorzugten Werte für a, b, c haben sich besonders bewährt, wenn als Endprodukte der Pyrolyse (nach Umwandlung der polymeren Hydridochlorsilazane in Polyhydridosilazane) eine Faser hergestellt werden soll.

Die polymeren Hydridochlorsilazane sind aufgrund ihrer physikalischen und chemischen Eigenschaften hervorragende Ausgangsmaterialien für die Herstellung präkeramischer Formkörper. Sie sind beispielsweise in organischen Lösungsmitteln löslich und bilden hinreichend stabile Schmelzen, um eine ganze Reihe von Formgebungsverfahren anwenden zu können, insbesondere bilden sie klare, blasenfreie Schmelzen, so daß aus diesen Schmelzen kontinuierliche, fehlerfreie Fasern gesponnen werden können.

Fasern lassen sich beispielsweise durch Spinnen einer Schmelze des polymeren Hydridochlorsilazans durch eine Spinndüse erhalten, die vorzugsweise einen Durchmesser von etwa 80 bis 200 µm hat. Durch anschließendes Strecken wird die Faser verjüngt, so daß nach der Pyrolyse eine sehr feste Faser von 2 bis 20 µm Durchmesser entsteht. Die Temperatur der Spinnschmelze liegt im allgemeinen bei 100 bis 200°C. Die so erhaltenen Polymerfasern werden dann einer $NH_3$-haltigen Atmosphäre ausgesetzt und anschließend in einer reduzierenden Atmosphäre wie Ammoniak, Wasserstoff oder deren Mischungen mit inerten Gasen, wie Stickstoff oder Edelgasen, pyrolysiert.

Die durch die Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der polymeren Hydridochlorsilazane besteht in der Herstellung dichter, gut haftender amorpher oder mikrokristalliner keramischer Beschichtungen auf Metallen oder Keramiken wie $Al_2O_3$, $ZrO_2$, MgO, SiC oder $Si_3N_4$. Die Beschichtung erfolgt z.B. durch Eintauchen des zu beschichtenden Körpers in eine Schmelze des polymeren Hydridochlorsilazans bei 100 - 200°C. Die Schmelze zum Verspinnen oder Beschichten wird vorzugsweise unter Inertgasschutz hergestellt.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Selbstverständlich können zur Herstellung von Fasern und Beschichtungen auch Lösungen der polymeren Hydridochlorsilazane in organischen Lösungsmitteln, wie Ethern, aliphatischen und aromatischen, ggf. chlorierten, Kohlenwasserstoffen eingesetzt werden.

Dabei lassen sich Fasern aus hochviskosen Lösungen des polymeren Hydridochlorsilazans in Lösungsmitteln, wie Toluol, THF oder Hexan ziehen. Das Fasernziehen geschieht vorteilhafterweise wieder mittels Spinndüsen von 80 bis 150 µm Durchmesser, wobei wieder durch anschließendes Strecken der Faden verjüngt wird, so daß nach der Pyrolyse ein sehr fester Faden von 2 bis 20 µm, insbesondere 5 bis 15 µm Durchmesser entsteht. Anschließend wird der Faden nach weitgehender Verdampfung des Lösungsmittels unschmelzbar gemacht und pyrolysiert, wie oben bei den aus der Schmelze gesponnenen Fasern beschrieben.

Auch die Beschichtung kann mit Hilfe einer Lösung des polymeren Hydridochlorsilazans in organischen Lösungsmitteln wie Toluol, THF, Hexan erfolgen. Anschließend wird die Beschichtung nach weitgehender Verdampfung des Lösungsmittels unschmelzbar gemacht und pyrolysiert, wie oben bei den aus der Schmelze gesponnenen Fasern beschrieben.

Das Unschmelzbarmachen und die pyrolytische Umwandlung in amorphes bzw. mikrokristallines Material erfolgt also auf die gleiche Weise, wie oben beschrieben, gleichgültig ob es sich um dreidimensionale Formkörper oder aus Schmelzen oder Lösungen gewonnenen Fasern oder Beschichtungen handelt.

**Beispiel 1**

**a) Herstellung von Oligohydridomethylsilazan $(CH_3SiHNH)_n$**

In 800 ml absolutem THF wurden 100 ml (0.97 mol) Methyldichlorsilan gelöst und für 3 Stunden Ammoniak eingeleitet (Einleitungsgeschwindigkeit: 0,5 l/min). Durch Kühlen mit einem Eisbad wurde die Reaktionstemperatur im Bereich von 20 bis 25°C gehalten. Zur Vervollständigung der Reaktion wurde 1 Stunde bei Raumtemperatur gerührt und anschließend unter Argon das Ammoniumchlorid abgetrennt. Der Niederschlag wurde zweimal mit je 350 ml THF gewaschen und die vereinigten THF-Lösungen unter reduziertem Druck eingeengt. Man erhielt ein klares, leicht bewegliches Öl von $(CH_3SiHNH)_n$ in einer Ausbeute von 44,5 g = 78 % der Theorie.

**b) Herstellung des polymeren Hydridochlorsilazans**

108,8 g (1,84 mol) Oligohydridomethylsilazan wurden bei 30 bis 45°C mit 176,1 g (1.53 mol) Methyldichlorsilan versetzt und im Ölbad innerhalb von 7 Stunden auf 200°C erhitzt. Dabei stieg die Innentemperatur von 46°C auf 164°C an. Oberhalb von 100°C setzte eine kräftige Gasentwicklung ein. Nach beendeter Reaktion und Abkühlung erhielt man ein sprödes Harz. Der Gesamtinhalt des Reaktionskolbens betrug 134 g. Das Harz wurde mit 500 ml THF extrahiert, der Rückstand anschließend mit 50 ml n-Hexan gewaschen und die organischen Lösungsmittel im Vakuum abgezogen. Zurück blieben 109 g eines weißen Pulvers der chemischen Zusammensetzung $C_1H_{3,62}Cl_{0,38}N_{0,8}Si_1$ .

Elementaranalyse (Gew.-%):

| | % Cl | % Si | % N | % C | % H |
|---|---|---|---|---|---|
| gefunden: | 19,1 | 39,8 | 16,2 | 16,5 | 6,8 |
| berechnet: | 19,7 | 41,0 | 16,4 | 17,6 | 5,3 |

Molmasse: 1865 g/mol, osmometrisch in Benzol

$^1$H-NMR: (100 MHz, $CDCl_3$, ppm): $\delta$ = 0,2 - 0,8 (br, 3H, $SiCH_3$), 1,5 - 1,9 (br, 0,1H, NH), 4,5 (br), 4,7 - 5,0 (br) und 5,1 (br, 0,4H, SiH).

IR: (KBr, $cm^{-1}$): 3380 (sh), 3150 (br, vs), 3050 (s), 2840 (w), 2160 (s), 1410 (vs), 1270 (vs), 1200 - 950 (br), 900 (br, vs), 760 (br, s).

**c) Herstellung von Fasern aus polymerem Hydridochlorsilazan**

20 g des polymeren Hydridochlorsilazans wurden unter $N_2$-Schutzgas in eine Schmelzspinnapparatur gegeben, auf 140°C erhitzt, und die Schmelze mittels eines Kolbens durch eine Spinndüse von 0,7 mm Durchmesser gedrückt. Unter dem eigenen Gewicht wurde die Spinnfaser zu einer Faserstärke von 20 µm gestreckt.

**Pyrolyse bei 1200°C**

Die resultierenden Fasern wurden bei Raumtemperatur mit $NH_3$-Gas behandelt und dadurch unschmelzbar gemacht und anschließend in einem Ofen unter $NH_3$-Atmosphäre pyrolysiert. Dazu wurde die Temperatur während 7 Stunden von 25°C auf 1200°C erhöht, 1 Stunde bei 1200°C gehalten und dann während 4 Stunden wieder auf Raumtemperatur gesenkt. Die resultierende Faser war röntgenamorph und enthielt neben Si und N als Hauptbestandteilen noch 0,1 % C, 0,6 % Cl und 2,0 % 0. Die keramische Ausbeute der Pyrolyse betrug 64 Gew.-%. Die Zugfestigkeit der Faser betrug 2 GPa.

**Beispiel 2** (Pyrolyse bei 1300°C)

Man arbeitete wie in Beispiel 1a) bis 1c). Anschließend wurde jedoch bei 1300°C statt bei 1200°C pyrolysiert:

Die Polymerfaser wurde mittels $NH_3$-Behandlung bei 25°C unschmelzbar gemacht und anschließend unter $NH_3$-Atmosphäre in 7 Stunden auf 1300°C erhitzt, 1 Stunde bei dieser Temperatur pyrolysiert und dann die Temperatur langsam während 5 Stunden auf Raumtemperatur gesenkt. Die resultierende Faser bestand aufgrund der Röntgenbeugungsanalyse teilweise aus kristallinem $\alpha$-$Si_3N_4$ neben amorphem Material. Die chemische Analyse ergab neben Si und N als Hauptbestandteilen noch 0,1 % C sowie 1,1 % Cl und 1,3 Gew.-% 0. Die Zugfestigkeit der Faser betrug 2,2 GPa.

## Patentansprüche

1. Verfahren zur Herstellung von Siliziumnitrid enthaltendem keramischem Material, dadurch gekennzeichnet, daß man polymere, Hydridochlorsilazane der Formel

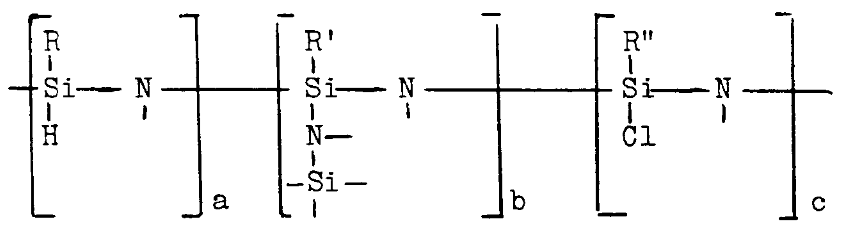

wobei die freien Valenzen der Stickstoffatome mit H-Atomen oder Silylresten R*SiXN< (X = H, Cl, N<) abgesättigt sind und wobei R, R′, R″, R* Alkylgruppen mit 1 bis 6 C-Atomen und a, b, c die Molfraktionen der jeweiligen Struktureinheiten bedeuten, bei einer Temperatur unterhalb des Erweichungspunktes der polymeren Hydridochlorsilazane durch Behandlung mit gasförmigem $NH_3$ unschmelzbar macht und sie dann in einer $NH_3$ enthaltenden Atmosphäre bei Temperaturen von 700 bis 1500°C pyrolysiert.

2. Verfahren nach Anspruch 1, dadurch gekennzeichnet, daß R, R′, R″, R* Alkylgruppen mit 1 bis 3 C-Atomen sind.

3. Verfahren nach Anspruch 1, dadurch gekennzeichnet, daß R = R′ = R″ = R* = $CH_3$ ist.

4. Verfahren nach einem der Ansprüche 1 bis 3, dadurch gekennzeichnet, daß man bei Temperaturen von 800 bis 1200°C pyrolysiert.

5. Verfahren nach einem der Ansprüche 1 bis 3, dadurch gekennzeichnet, daß man bei Temperaturen von 1300 bis 1500°C pyrolysiert.

6. Verfahren nach einem der Ansprüche 1 bis 5, dadurch gekennzeichnet, daß man zur Herstellung von Siliziumnitrid enthaltenden keramischen Fasern das polymere Hydridochlorsilazan zunächst unter Inertgas schmilzt, die Schmelze durch eine Spinndüse zu einer Faser verspinnt, die Faser dann unschmelzbar macht und pyrolysiert.

7. Verfahren nach Anspruch 6, dadurch gekennzeichnet, daß die Faser zu Durchmessern von 2 - 20 µm gestreckt wird, ehe man sie unschmelzbar macht und pyrolysiert.

8. Verfahren nach einem der Ansprüche 1 bis 5, dadurch gekennzeichnet, daß man zur Herstellung von Siliziumnitrid enthaltenden keramischen Beschichtungen das polymere Hydridochlorsilazan zunächst unter Inertgas schmilzt, mit der Schmelze die Beschichtung vornimmt, die Beschichtung dann unschmelzbar macht und pyrolysiert.

9. Verfahren nach einem der Ansprüche 1 bis 5, dadurch gekennzeichnet, daß man zur Herstellung von Siliziumnitrid enthaltenden keramischen Formkörpern das polymere Hydridochlorsilazan zunächst unter Inertgas schmilzt, die Schmelze in eine Form gießt, den erhaltenen Formkörper dann unschmelzbar macht und pyrolysiert.

10. Verfahren nach einem der Ansprüche 1 bis 5, dadurch gekennzeichnet, daß man zur Herstellung von Siliziumnitrid enthaltenden keramischen Fasern oder Beschichtungen eine Lösung der polymeren Hydridochlorsilazane in einem organischen Lösungsmittel einsetzt, die entstandene Faser oder Beschichtung nach weitgehender Verdampfung des Lösungsmittels unschmelzbar macht und pyrolysiert.

## Claims

1. A process for the production of ceramic material containing silicon nitride, which comprises rendering polymeric hydrido-chlorosilazanes of the formula

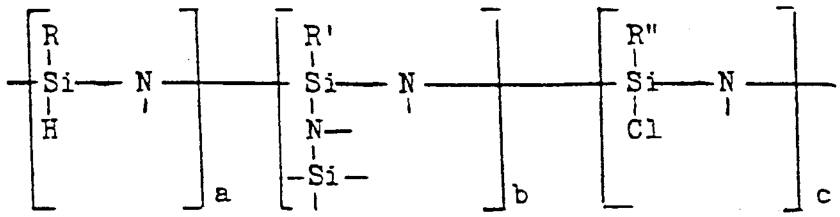

in which the free valencies of the nitrogen atoms are saturated with H atoms or silyl radicals $R^*SiXN<$ (X = H, Cl, N<) and in which R, R′, R″ and $R^*$ are alkyl groups having 1 to 6 C atoms and a, b and c are the mol fractions of the respective structural units, infusible at a temperature below the softening point of the polymeric hydridochlorosilazanes by treatment with gaseous $NH_3$ and then pyrolyzing them in an atmosphere containing $NH_3$ at temperatures of 700 to 1500°C.

2. The process as claimed in claim 1, wherein R, R′, R″ and $R^*$ are alkyl groups having 1 to 3 C atoms.

3. The process as claimed in claim 1, wherein R = R′ = R″ = $R^*$ = $CH_3$.

4. The process as claimed in any one of claims 1 to 3, wherein pyrolysis is carried out at temperatures of 800 to 1200°C.

5. The process as claimed in any one of claims 1 to 3, wherein pyrolysis is carried out at temperatures of 1300 to 1500°C.

6. The process as claimed in any one of claims 1 to 5, wherein ceramic fibers containing silicon nitride are produced by first melting the polymeric hydridochlorosilazane under inert gas, spinning the melt through a spinneret to form a fiber and then rendering the fiber infusible and pyrolyzing et.

7. The process as claimed in claim 6, wherein the fiber is stretched to diameters of 2 - 20 μm before it is rendered infusible and pyrolyzed.

8. The process as claimed in any one of claims 1 to 5, wherein ceramic coatings containing silicon nitride are produced by first melting the polymeric hydridochlorosilazane under inert gas, applying the coating with the melt and then rendering the coating infusible and pyrolyzing it.

9. The process as claimed in any one of claims 1 to 5, wherein ceramic moldings containing silicon nitride are produced by first melting the polymeric hydridochlorosilazane under inert gas, pouring the melt into a mold and then rendering the resulting molding infusible and pyrolyzing it.

10. The process as claimed in any one of claims 1 to 5, wherein ceramic fibers or coatings containing silicon nitride are produced by using a solution of the polymeric hydridochlorosilazanes in an organic solvent and, after extensive vaporization of the solvent, rendering the resulting fiber or coating infusible and pyrolyzing it.

## Revendications

1. Procédé pour préparer une matière céramique contenant du nitrure de silicium, procédé caractérisé en ce qu'on rend infusible, par traitement avec $NH_3$ gazeux à une température inférieure au point de ramollissement des hydrurochlorosilazanes polymères, des hydrurochlorosilazanes polymères de formule :

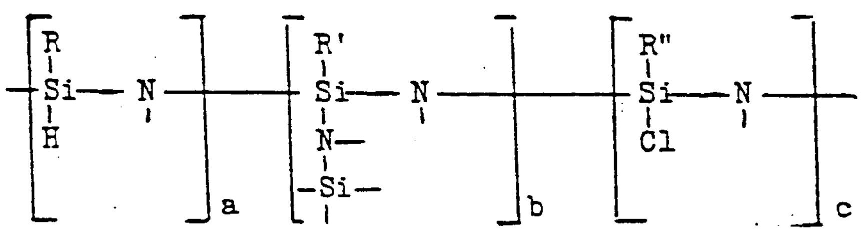

(dans laquelle les valences libres des atomes d'azote sont saturées par des atomes de H ou par des restes silyles $R^*SiXN <$ (X représentant H, Cl ou N<) et les symboles R, R′, R″, $R^*$ représentant des groupes alkyles ayant 1 à 6 atomes de carbone ; et a, b et c représentant les fractions molaires des divers motifs structurels), et l'on effectue ensuite une pyrolyse des hydrurochlorosilazanes polymères, dans une atmosphère contenant $NH_3$, à des températures de 700 à 1500°C.

2. Procédé selon la revendication 1, caractérisé en ce que les symboles R, R′, R″, $R^*$ représentent des groupes alkyles ayant 1 à 3 atomes de carbone.

3. Procédé selon la revendication 1, caractérisé en ce que $R = R' = R'' = R^{*} = CH_3$.

4. Procédé selon l'une des revendications 1 à 3, caractérisé en ce qu'on effectue la pyrolyse à des températures de 800 à 1200°C.

5. Procédé selon l'une des revendications 1 à 3, caractérisé en ce qu'on effectue la pyrolyse à des températures de 1300 à 1500°C.

6. Procédé selon l'une des revendications 1 à 5, caractérisé en ce que, pour produire des fibres céramiques contenant du nitrure de silicium, on fait tout d'abord fondre sous gaz inerte l'hydrurochlorosilazane polymère, on file la masse fondue, à travers une filière, pour obtenir une fibre, on rend ensuite la fibre infusible et on la pyrolyse.

7. Procédé selon la revendication 6, caractérisé en ce qu'on étire la fibre jusqu'à des diamètres de 2 à 20 µm avant de la rendre infusible et de la soumettre à pyrolyse.

8. Procédé selon l'une des revendications 1 à 5, caractérisé en ce que, pour préparer des revêtements en une matière céramique contenant du nitrure de silicium, on fait fondre tout d'abord sous gaz inerte l'hydrurochlorosilazane polymère, on effectue le revêtement avec la masse fondue, puis l'on rend le revêtement infusible et on le soumet à pyrolyse.

9. Procédé selon l'une des revendications 1 à 5, caractérisé en ce que, pour produire des objets moulés en une matière céramique contenant du nitrure de silicium, on fait fondre tout d'abord sous gaz inerte l'hydrurochlorosilazane polymère, on verse la masse fondue dans un moule, puis l'on rend infusible l'objet moulé ainsi obtenu que l'on soumet ensuite à pyrolyse.

10. Procédé selon l'une des revendications 1 à 5, caractérisé en ce que, pour produire des fibres ou des revêtements en une matière céramique contenant du nitrure de silicium, on prépare une solution des hydrurochlorosilazanes polymères dans un solvant organique, et, après évaporation poussée du solvant, on rend infusible la fibre ou le revêtement ainsi obtenu que l'on soumet ensuite à pyrolyse.